# EUROPEAN PATENT APPLICATION

(11) **EP 2 840 484 A2**
(43) Date of publication of application: **25.02.2015**
(21) Application number: 14177534.6
(22) Date of filing: 17.07.2014
(51) Int. Cl.: G06F 9/38

(54) **Processor and control method of processor**

(30) Priority: 15.08.2013 JP 2013168910
(71) Applicant: FUJITSU LIMITED, Kawasaki-shi, Kanagawa 211-8588 (JP)
(72) Inventor: Suzuki, Takashi, Kawasaki-shi, Kanagawa 211-8588 (JP)
(74) Representative: Fenlon, Christine Lesley

(57) **Abstract**

When predicting that branch is established as a result of performing branch prediction of a branch instruction based on pieces of branch information on branch instructions included in entries read from branch histories stored in a branch history storing unit which stores, in each way, the branch history including a first index being part of an instruction address and a second index being a value obtained by an arithmetic operation using part of the instruction address, a branch predicting unit outputs a predicted branch destination address, and when a prediction failure of the predicted branch destination address obtained by the branch prediction is detected, a branch history updating unit sets updated information of the branch information to update the branch history, and when the prediction failure is detected and the updated information is set in the branch information, registers the branch information in the branch history stored in the branch history storing unit, by using the second index.

## Description

### FIELD

The embodiment discussed herein is directed to a processor and a control method of a processor.

### BACKGROUND

A branch predicting mechanism of a processor predicts a branch destination of a branch instruction executed next, by managing execution history of branch instructions executed in the past based on storage addresses of instructions (hereinafter, referred to as instruction addresses) on a memory (for example, refer to Patent Document 1). The branch predicting mechanism holds information on the branch instructions executed in the past (branch instruction addresses, branch destination addresses, branch success/failure, and so on) as branch history, and at the time of reading (fetching) of an instruction, it searches the branch history by using its instruction address to thereby predict a success/failure of branch and a branch destination address.

In parallel to the fetching of the instruction, the processor determines by the branch predicting mechanism whether or not the instruction is a branch instruction, and when the instruction is the branch instruction, a predicted branch destination address can be obtained. Therefore, when the processor executes pipeline processing, based on the predicted branch destination address, it is possible to prepare for the next-stage instruction fetch in parallel to the current instruction fetch. When an actually obtained branch destination address is the predicted branch destination address, the processor continues to execute the pipeline processing. On the other hand, when the actually obtained branch destination address is not the predicted branch destination address, the processor cancels the speculatively executed pipeline processing of the instruction and fetches an instruction from a correct branch destination address to execute the processing.

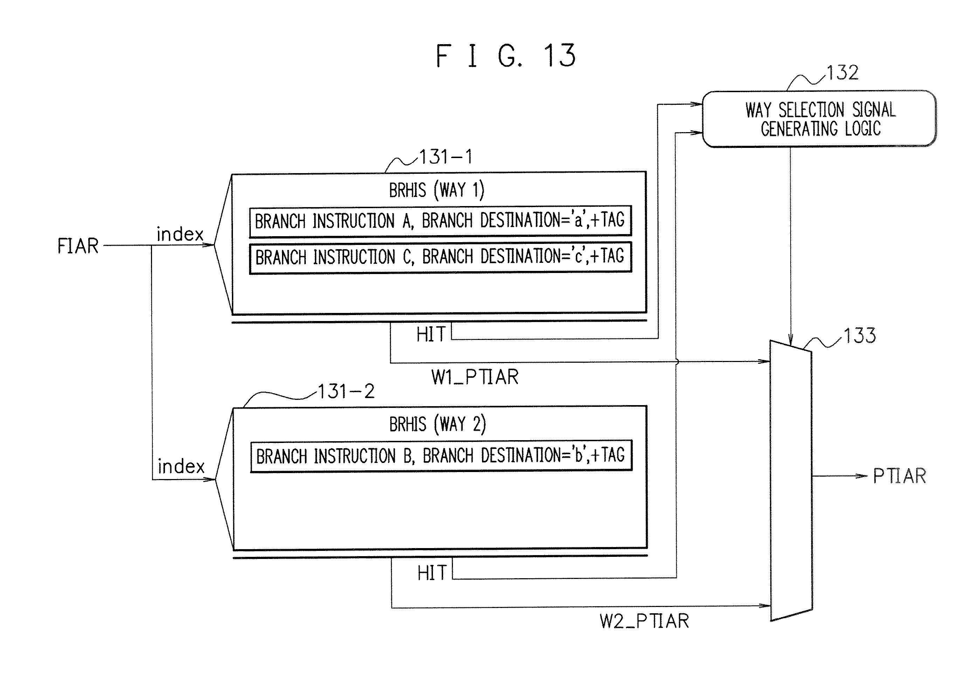

The conventional branch predicting method will be described with reference to FIG. 13. The branch predicting mechanism decides an index of a set associative branch history (BRHIS) from part of an instruction address of an executed branch instruction. The branch predicting mechanism sets the other part of the instruction address of the branch instruction as a tag and registers a branch destination address in a block corresponding to the index of one way. In this manner, the branch predicting mechanism holds one branch destination address per branch instruction as the branch history. In FIG. 13, in a way 1 (131-1) of the branch history, a branch destination address (a), a tag, and so on of a branch instruction A and a branch destination address (c), a tag, and so on of a branch instruction C are held. In a way 2 (131-2) of the branch history, a branch destination address (b), a tag, and so on of a branch instruction B are held.

At the time of fetching an instruction, the branch predicting mechanism searches the branch histories 131-1, 131-2 by an index decided from part of an instruction fetch address FIAR. When the instruction to be fetched is a branch instruction executed in the past and its branch destination address is stored in the branch history, the branch predicting mechanism outputs a branch destination address W1_PTIAR or W2_PTIAR in the branch history as a predicted branch destination address PTIAR. At this time, as the predicted branch destination address PTIAR, a way selection signal generating logic 132 and a selecting unit 133 of the branch predicting mechanism output a branch destination address which is in a block corresponding to the index and which is output from a way where the branch instruction address is the smallest, out of ways where a tag agrees with the other part of the instruction fetch address FIAR.

Here, branch instructions include a relative address branch whose branch destination address is generated by calculating an immediate value designated in a branch instruction and an instruction address of the currently executed branch instruction, and a register indirect branch whose branch destination address is generated by referring to a value of a register. The immediate value means a value stored in a certain field in the instruction. In the relative address branch, a branch destination address is uniquely decided for one instruction address. In the register indirect branch, since a branch destination address is decided according to the value of the register at the time of the execution of a branch instruction, a branch destination address that can be generated for a branch instruction at one instruction address can have a plurality of values.

As a branch predicting method having high branch prediction accuracy for a branch instruction of the register indirect branch whose branch destination address can vary, there has been proposed an art called Rehashable Branch Target Buffer (R-BTB) capable of holding a plurality of branch destination addresses as a branch history per branch instruction (for example, refer to Non-patent Document 1).

The branch predicting method of R-BTB will be described with reference to FIG. 14. A branch predicting mechanism of R-BTB, unlike the art of Patent Document 1, stores two branch destination addresses or more per branch instruction at one instruction address and uses the stored two branch destination addresses or more for branch prediction, thereby capable of high-accuracy branch prediction even for the register indirect branch whose branch destination address varies. The branch predicting mechanism counts the number of times the prediction of a branch destination address of each branch instruction fails, in other words, the number of times a branch destination address of each branch instruction varies. A CIBIB (Critical Indirect Branch Instruction Buffer) 143 has a table storing instruction addresses of branch instructions for which the number of times of the prediction failures exceeds a certain threshold value.

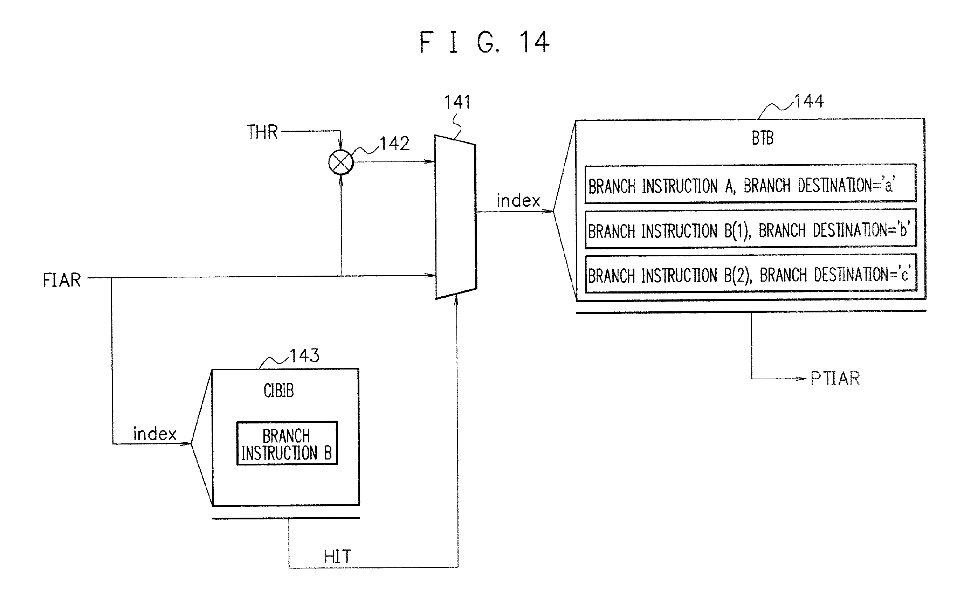

When the number of times of the prediction failures of a branch destination address of a branch instruction does not exceed the certain threshold value, that is, an instruction address of the branch instruction is not stored in the CIBIB 143, a selecting unit 141 of the branch predicting mechanism decides part of the instruction address of the branch instruction as an index of a branch history. When the number of times of the prediction failures of the branch destination address of the branch instruction exceeds the certain threshold value, that is, when the instruction address of the branch instruction is stored in the CIBIB 43, the selecting unit 141 of the branch predicting mechanism decides an index of the branch history based on a value obtained by an exclusive logical sum operation circuit 142 performing an arithmetic operation of part of the instruction address of the branch instruction and a certain value which varies in accordance with the execution of a plurality of instructions including the branch instruction. In FIG. 14, as the value varying in accordance with the execution of the plural instructions, used is a value of a register THR (Target History Register) in which parts of branch destination addresses of branch instructions executed before the target branch instruction is executed are connected in time series (for example, refer to Non-patent Document 2).

In this manner, in the branch predicting method of R-BTB, it is possible to relate a plurality of branch destination addresses to a branch instruction at one instruction address. For example, in FIG. 14, in a branch history 144, a branch destination address (b) of a branch instruction B is held as an entry B(1) by using a value obtained by an exclusive logical sum operation of part of the instruction address of the branch instruction and a value of the register THR as an index, and a branch destination address (c) of the branch instruction B is held as an entry B(2) different from the entry B(1) by using, as an index, a value obtained by an exclusive logical sum operation of part of the instruction address of the branch instruction and a value of the register THR different from the value at the time of the registration of the entry B(1).

At the time of the branch prediction, when an instruction address of a branch instruction is stored in the CIBIB 143, the branch predicting mechanism searches the branch history 144 by using, as an index, a value obtained by an exclusive logical sum operation of part of an instruction fetch address FIAR and a value of the register THR. When the instruction address of the branch instruction is not stored in the CIBIB 143, the branch predicting mechanism searches the branch history 144 by using part of the instruction fetch address FIAR as an index. The branch predicting mechanism outputs, as a predicted branch destination address PTIAR, a branch destination address in a block which corresponds to the index and in which a tag agrees with the other part of the instruction fetch address FIAR.
[Patent Document 1] Japanese Laid-open Patent Publication No. 06-89173
[Non-patent Document 1] T.Li, R.Bhargava, and L.K. John. Rehashable BTB: An Adaptive Branch Target Buffer to Improve the Target Predictability of Java Code. In HiPC-02, 2002.
[Non-patent Document 2] P.-Y. Chang, E.Hao, and Y.N. Patt. Target prediction for indirect jumps. In ISCA-24, 1997.

The above-described branch predicting method of R-BTB is capable of holding a plurality of branch destination addresses as the branch history for one branch instruction and is capable of obtaining high branch prediction accuracy even for a branch instruction whose branch destination address varies. However, in the branch predicting method of R-BTB, the table of the CIBIB 143 and the circuit which counts and holds the number of times of the prediction failures of a branch destination address for each branch instruction are provided, resulting in an increase in circuit scale. Further, since the branch predicting method of R-BTB decides the index by using the result obtained by the search of the CIBIB 143 and then searches the branch history, a logic volume required up to the search of the branch history is large, which is not suitable for an increase in frequency of a processor.

### SUMMARY

It is desirable to enable branch prediction of branch instructions including a branch instruction whose branch destination address varies while allowing an increase in frequency and preventing an increase in circuit scale in a processor.

According to an aspect of an embodiment, a processor includes: an instruction executing unit which executes an instruction; a branch history storing unit which stores, in each of a plurality of ways, a branch history including a first index which is part of an address of the instruction executed by the instruction executing unit and a second index which is an arithmetic operation result value obtained by an arithmetic operation using part of the instruction address; a branch predicting unit which, when predicting that branch is established as a result of performing branch prediction of the branch instruction based on pieces of branch information on branch instructions included in entries read from the branch histories stored in the branch history storing unit, selects one piece of the branch information from the plural pieces of read branch information corresponding to the plural ways respectively to output a predicted branch destination address; and a branch history updating unit which, when the predicted branch destination address output by the branch predicting unit is different from a branch destination address obtained from the branch instruction, sets updated information of the branch information to update the branch history, and when the predicted branch destination address output by the branch predicting unit is different from the branch destination address obtained from the branch instruction and the updated information is set in the branch information, registers the branch information in the branch history stored in the branch history storing unit, by using the second index.

### BRIEF DESCRIPTION OF DRAWINGS

The invention is described, by way of example only, with reference to the following drawings, in which:
FIG. 1 is a diagram illustrating a configuration example of an information processing system;
FIG. 2 is a diagram illustrating a configuration example of a processor in this embodiment;
FIG. 3 is an explanatory diagram of a branch predicting method in this embodiment;
FIG. 4 is a chart illustrating a configuration example of an entry of a branch history in this embodiment;
FIG. 5 is a diagram illustrating a configuration example of a branch predicting unit in this embodiment;
FIG. 6 is a diagram illustrating a configuration example of a way selection signal generating unit in this embodiment;
FIG. 7 is a diagram illustrating a configuration example of a branch instruction detecting unit in this embodiment;
FIG. 8 is a diagram illustrating a configuration example of a branch destination address generating unit in this embodiment;
FIG. 9 is a diagram illustrating a configuration example of a branch information selecting unit in this embodiment;
FIG. 10A and FIG. 10B are flowcharts illustrating an operation example of the branch predicting unit in this embodiment;
FIG. 11 is a diagram illustrating a configuration example of a branch history updating unit in this embodiment;
FIG. 12 is a flowchart illustrating an operation example of the branch history updating unit in this embodiment; and
FIG. 13 and FIG. 14 are explanatory diagrams of conventional branch predicting methods.

### DESCRIPTION OF EMBODIMENTS

Hereinafter, an embodiment will be described with reference to the drawings.

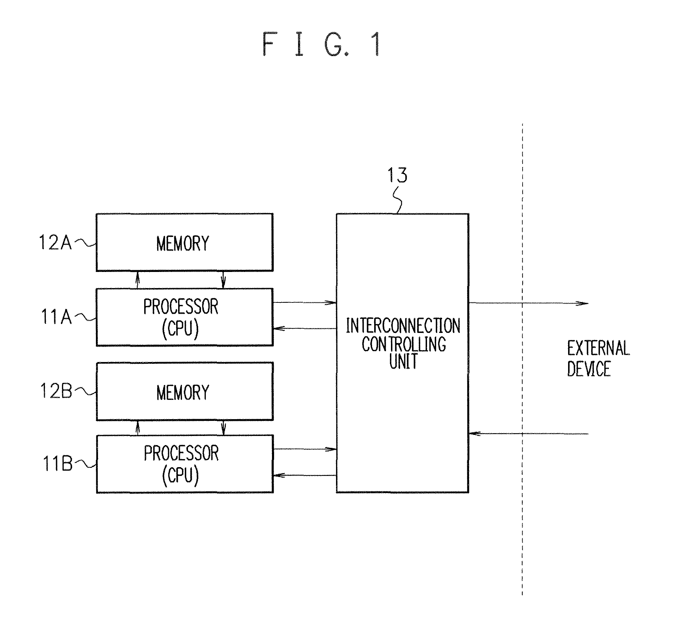

FIG. 1 is a diagram illustrating a configuration example of an information processing system including processors. The information processing system illustrated in FIG. 1 has, for example, a plurality of processors 11A, 11B, memories 12A, 12B, and an interconnection controlling unit 13 which performs input/output control to/from external devices.

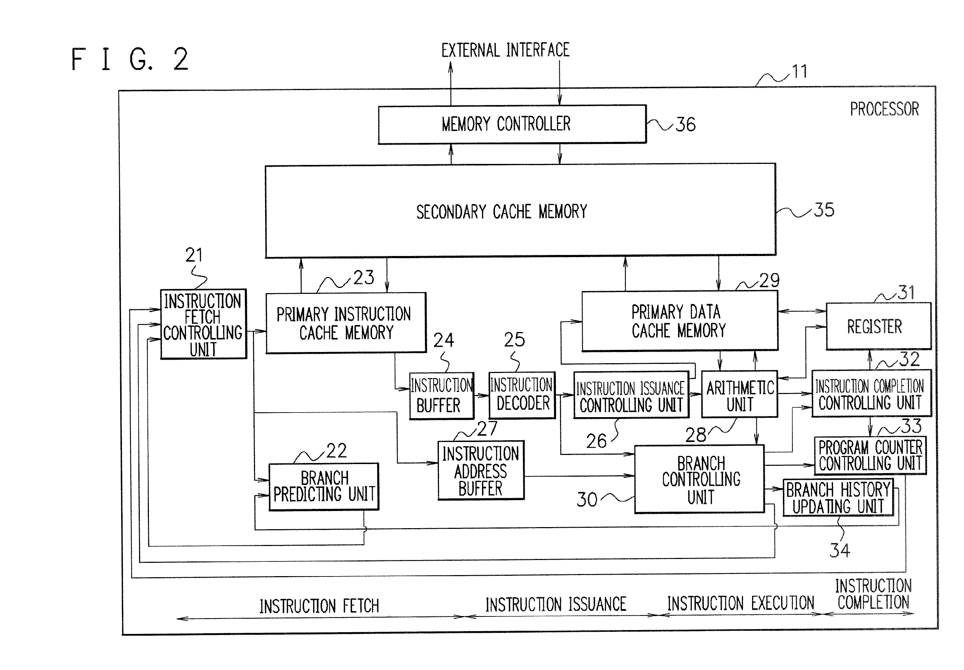

FIG. 2 is a diagram illustrating a configuration example of the processor 11 in this embodiment. The processor 11 has, for example, functions of out-of-order execution and pipeline processing of instructions.

At an instruction fetch stage, an instruction fetch controlling unit 21, a branch predicting unit 22, a primary instruction cache memory 23, an instruction buffer 24, a secondary cache memory 35, and so on operate. The instruction fetch controlling unit 21 receives a predicted branch destination address of a fetched instruction from the branch predicting unit 22, receives a branch destination address decided by a branch arithmetic operation from a branch controlling unit 30, receives a program counter value being an address of an instruction which is next completed from a program counter controlling unit 33, and so on. The instruction fetch controlling unit 21 selects one address from the predicted branch destination address, the branch destination address, and the program counter value which are received, and a next continuous address of an instruction which is created in the instruction fetch controlling unit 21 and which is fetched when the branch does not take place, and so on, to decide the selected address as a next instruction fetch address. The instruction fetch controlling unit 21 outputs the decided instruction fetch address to the primary instruction cache memory 23 and fetches an instruction code corresponding to the decided instruction fetch address which is output.

The primary instruction cache memory 23 stores part of data of the secondary cache memory 35, and the secondary cache memory 35 stores part of data of a memory accessible via a memory controller 36. When data at the relevant address does not exist in the primary instruction cache memory 23, the data is fetched from the secondary cache memory 35, and when the relevant data does not exist in the secondary cache memory 35, the data is fetched from the memory. In this embodiment, since the memory is disposed outside the processor 11, the input/output control to/from the external memory is performed via the memory controller 36. The instruction code fetched from the relevant address of the primary instruction cache memory 23, the secondary cache memory 35, or the memory is stored in the instruction buffer 24.

The branch predicting unit 22 receives the instruction fetch address output from the instruction fetch controlling unit 21 to execute branch prediction in parallel to the instruction fetch. The branch predicting unit 22 performs the branch prediction based on the received instruction fetch address and returns a branch direction indicating establishment or non-establishment of the branch and the predicted branch destination address to the instruction fetch controlling unit 21. When the predicted branch direction indicates the establishment, the instruction fetch controlling unit 21 selects the branch destination address predicted by the branch predicting unit 22 as the next instruction fetch address.

At an instruction issuance stage, an instruction decoder 25 and an instruction issuance controlling unit 26 operate. The instruction decoder 25 receives the instruction code from the instruction buffer 24, analyzes the kind of the instruction and execution sources, and so on, and outputs the analysis result to the instruction issuance controlling unit 26, the branch controlling unit 30, and an instruction completion controlling unit 32.

The instruction issuance controlling unit 26 has a structure of a reservation station. The instruction issuance controlling unit 26 checks a dependence relation of a register and so on which are referred to in the instruction and determines whether or not the execution sources are capable of executing the instruction, based on an update status of the register having the dependence relation, an instruction execution status using the execution sources, and so on. When determining that the execution sources are capable of executing the instruction, the instruction issuance controlling unit 26 outputs, to the execution sources, information for the execution of the instruction, such as the register number and an operand address. The instruction issuance controlling unit 26 has a buffer function of storing the instruction until it becomes executable. An instruction address buffer 27 stores the instruction fetch address output from the instruction fetch controlling unit 21.

At an instruction execution stage, execution sources such as an arithmetic unit 28, a primary data cache memory 29, and the branch controlling unit 30 operate. The arithmetic unit 28 receives data from a register 31 and the primary data cache memory 29 to execute arithmetic operations corresponding to the instruction, such as four arithmetic operations, a logical operation, a trigonometric function operation, and address calculation and outputs the arithmetic operation results to the register 31 and the primary data cache memory 29.

The primary data cache memory 29, similarly to the primary instruction cache memory 23, stores part of the data of the secondary cache memory 35. The primary data cache memory 29 is used for the loading of data from the memory to the arithmetic unit 28 and the register 31 in response to a load instruction, the storing of data from the arithmetic unit 28 and the register 31 to the memory in response to a store instruction. Each of the execution sources outputs a completion notice of the instruction execution to the instruction completion controlling unit 32.

The branch controlling unit 30 has a structure of a reservation station. The branch controlling unit 30 receives the kind of a branch instruction from the instruction decoder 25, a branch instruction address synchronous with the instruction decoder 25 from the instruction address buffer 27, the branch destination address and the result of an arithmetic operation serving as a branch condition from the arithmetic unit 28, and stores these pieces of information for each branch instruction. The branch controlling unit 30 determines that the branch is established when the obtained arithmetic operation result satisfies the branch condition, and otherwise determines that the branch is not established, and decides a branch direction. The branch controlling unit 30 also determines whether or not the arithmetic operation result and the branch destination address at the time of the branch prediction agree with the branch direction and also controls a sequence relation of branch instructions. At the time of creating an entry of the branch reservation station, the branch controlling unit 30 registers the branch direction and the branch destination address obtained at the time of the branch prediction, and after executing the verification of the agreement between the arithmetic operation result and the prediction, performs substitution of the entry according to the arithmetic operation result.

When the arithmetic operation result and the prediction agree with each other, the branch controlling unit 30 outputs the completion notice of the branch instruction to the instruction completion controlling unit 32. On the other hand, when the arithmetic operation result and the prediction do not agree with each other, since it means a failure of the branch prediction, the branch controlling unit 30 outputs a cancel request of a subsequent instruction and an instruction re-fetch request to the instruction completion controlling unit 32 together with the completion notice of the branch instruction. When the branch establishment is decided, the branch controlling unit 30 outputs a branch destination address indicated by the arithmetic operation result from an entry of the branch reservation station for which the completion notice is output, to the program counter controlling unit 33.

At an instruction completion stage, the instruction completion controlling unit 32, the register 31, the program counter controlling unit 33, and a branch history updating unit 34 operate. The instruction completion controlling unit 32 stores the kinds and so on of instructions received from the instruction decoder 25 in a commit stack entry in sequence. Based on the completion notices received from the execution sources of the instruction, the instruction completion controlling unit 32 performs instruction completion processing in order of the instruction codes stored in the commit stack entry and outputs update instructions of the register, a program counter, and so on. When receiving the register update instruction from the instruction completion controlling unit 32, the register 31 executes the update of the register based on data of the arithmetic operation result received from the arithmetic unit 28 and the primary data cache memory 29.

The program counter controlling unit 33 receives the instruction completion instruction and the kind of the completed instruction from the instruction completion controlling unit 32, and the branch destination address from the branch controlling unit 30. When receiving the instruction completion instruction of the branch instruction from the instruction completion controlling unit 32, the program counter controlling unit 33 sets the branch destination address received from the branch controlling unit 30 in the program counter. When receiving an instruction completion instruction of an instruction other than the branch instruction from the instruction completion controlling unit 32, the program counter controlling unit 33 adds a value of the program counter according to the number of the completed instructions. A value of the program counter after the updating indicates an address of an instruction that is to be completed next. Based on the result of the branch arithmetic operation received from the branch controlling unit 30, the branch history updating unit 34 creates updated data of the history of the branch prediction to output it to the branch predicting unit 22.

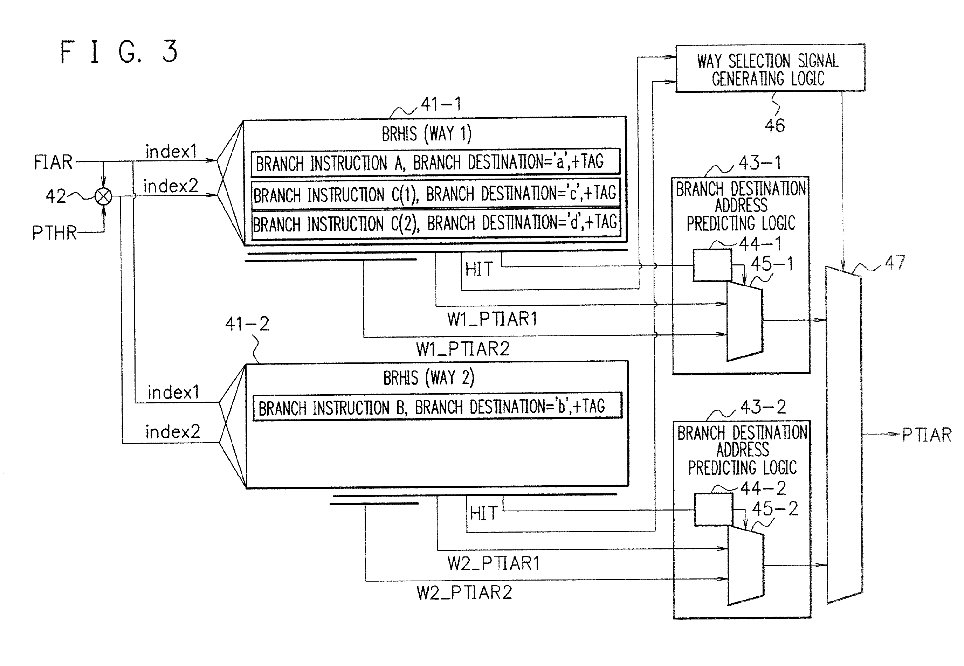

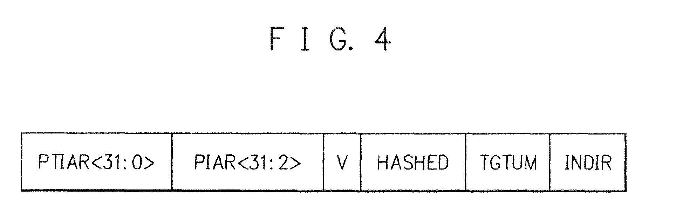

FIG. 3 is an explanatory diagram of the branch predicting method in this embodiment. In the branch predicting method in this embodiment, a branch history (BRHIS) is composed of a plurality of ways. In FIG. 3, an example where the branch history is composed of two ways (41-1, 41-2) is illustrated, but this is not restrictive. The ways are each a two-port multi-read RAM (Random Access Memory). In the way 1 (41-1) and the way 2 (41-2) of the branch history, branch information illustrated in FIG. 4 is registered.

FIG. 4 is a chart illustrating a configuration example of an entry of the branch history in this embodiment. In this embodiment, in each entry of the branch history, there is stored the branch information including a registered instruction address PIAR <31:2> of a branch instruction, a branch destination address PTIAR <31:0>, and flags V, HASHED, TGTUM, INDIR.

The flag V is a flag indicating whether or not the registered branch information is valid. In this embodiment, the flag V is set to "1" when the branch information is valid, and is set to "0" when the branch information is not valid. The flag HASHED is a flag indicating whether or not an index used at the time of the registration of the branch information is a hashed index. In this embodiment, the flag HASHED is set to "1" when the index used at the time of the registration is the hashed index, and is set to "0" when the index used at the time of the registration is a non-hashed index.

Here, the non-hashed index is an index using part of the instruction address of the branch instruction. The hashed index is an index using a value obtained by an exclusive logical sum operation of part of the instruction address of the branch instruction and a variable value which varies in accordance with the execution of a plurality of instructions including the branch instruction. In this embodiment, as the variable value which varies in accordance with the execution of the plural instructions, used is a value which is held in a register THR (Target History Register) and in which parts of branch destination addresses of branch instructions executed before the target branch instruction is executed are connected in time series (partial branch address connection value).

The flag TGTUM is a flag indicating whether or not a prediction failure of a branch destination address of a branch instruction relating to the registered branch information was detected in the past. In this embodiment, the flag TGTUM is set to "1" when the prediction failure of the branch destination address of this branch instruction was detected in the past, and set to "0" when the prediction failure of the branch address was not detected at all in the past. The flag INDIR is a flag indicating whether or not the branch instruction relating to the registered branch information is a register indirect branch. In this embodiment, the flag INDIR is set to "1" when this branch instruction is a branch instruction of the register indirect branch, and is set to "0" when it is not the branch instruction of the register indirect branch (is a branch instruction of a relative address branch).

The flags V, HASHED, TGTUM, INDIR are "0" in an initial state. When a branch instruction whose branch information is not stored in the branch history is executed, the branch history updating unit 34 sets the flag V to "1", and when this branch instruction is a branch instruction of a register indirect branch, sets the flag INDIR to "1", and registers the instruction address PIAR<31:2> and the branch destination address PTIAR<31:0> of the branch instruction to update the branch history that the branch predicting unit 22 has. At this time, as an index of the updated branch history, a non-hashed index is used.

Thereafter, the branch instruction of the register indirect branch at the same instruction address is executed again, and when the flag V of the branch history relating to this branch instruction is "1" at the time of the branch prediction, and when the arithmetic operation of the branch instruction of the register indirect branch is completed and a prediction failure of a branch destination address is found, the branch history updating unit 34 sets the flag TGTUM to "1" and updates the branch destination address PTIAR<31:0> by a value obtained at the time of the completion of the arithmetic operation. At this time, as an index of the updated branch history, a non-hashed index is used.

Further, the branch instruction of the register indirect branch at the same instruction address is executed again and when the flag TGTUM of the branch history relating to this branch instruction is "1" at the time of the branch prediction, and when a prediction failure of a branch destination address is found at the time of the completion of the arithmetic operation, the branch history updating unit 34 determines that the frequency of a change of the branch destination address of this branch instruction is high. Then, by using the hashed index, the branch history updating unit 34 registers the instruction address PIAR<31:2> of the branch instruction and the branch destination address PTIAR<31:0> which is the arithmetic operation result, in the same way as the way in which the branch information is registered by using the non-hashed index, thereby updating the branch history. At this time, the flags V, HASHED, TGTUM, INDIR are all set to "1". For example, as illustrated in FIG. 3 as an example, when branch information of a branch instruction C whose branch destination address is "c", which information is registered by using the non-hashed index, is registered in the way 1 (41-1) of the branch history, branch information of the branch instruction C whose branch destination address is "d", which information is registered by using the hashed index, is registered in the way 1 (41-1) of the branch history.

Thereafter, the branch instruction of the register indirect branch at the same instruction address is executed and when a prediction failure of a branch destination address is found at the time of the completion of the arithmetic operation, the branch history updating unit 34 registers the branch information by using the hashed index in the same way as the way in which the branch information of this branch instruction is registered. The branch history updating unit 34 registers the instruction address PIAR<31:2> of the branch instruction and the branch destination address PTIAR<31:0> which is the arithmetic operation result, and also sets all the flags V, HASHED, TGTUM, INDIR to "1" to update the branch history.

At the time of the branch prediction, the branch predicting unit 22 refers to the way 1 (41-1) and the way 2 (41-2) of the branch history by using a non-hashed index index1 and a hashed index index2. The non-hashed index index1 is an index being part of the instruction fetch address FIAR. The hashed index index2 is an index being a value obtained by an exclusive logical sum operation circuit (XOR circuit) 42 performing an XOR operation of part of the instruction fetch address FIAR and a value of the register THR.

Therefore, from the way 1 (41-1) of the branch history, a branch destination address W1_PTIAR1 retrieved by the non-hashed index index1 and a branch destination address W1_PTIAR2 retrieved by the hashed index index2 are output. Similarly, from the way 2 (41-2) of the branch history, a branch destination address W2_PTIAR1 retrieved by the non-hashed index index1 and a branch destination address W2_PTIAR2 retrieved by the hashed index index2 are output.

The branch predicting unit 22 selects a branch destination address out of those output from the branch history of each of the ways by a branch destination address selection signal generating logic 44 and a branch destination address selecting logic 45 that a branch destination address predicting logic 43 has. When the flag TGTUM and the flag INDIR are both "1" in the branch information obtained from the non-hashed index, and in the branch information in the same way obtained from the hashed index, the flag HASHED is "1" and part of the registered instruction address is the same between the non-hashed index and the hashed index, the branch destination address of the branch information obtained from the hashed index is selected. On the other hand, when the aforesaid conditions are not all satisfied, the branch destination address of the branch information obtained from the non-hashed index is selected.

A way selection signal generating logic 46 of the branch predicting unit 22 refers to the branch information of the branch history to decide whether or not the fetched instruction is the branch instruction and from which way the branch destination address is to be obtained, and generates a way selection signal. A branch information selecting logic 47 selects the branch destination address from the way designated by the way selection signal and outputs it as the predicted branch destination address PTIAR. In this embodiment, since a way in which branch information of some branch instruction is registered by using a non-hashed index and a way in which it is registered by using a hashed index are the same, it is possible for the way selection signal generating logic 46 to generate the way selection signal by using only the branch information obtained from the non-hashed index without using the branch information obtained from the hashed index.

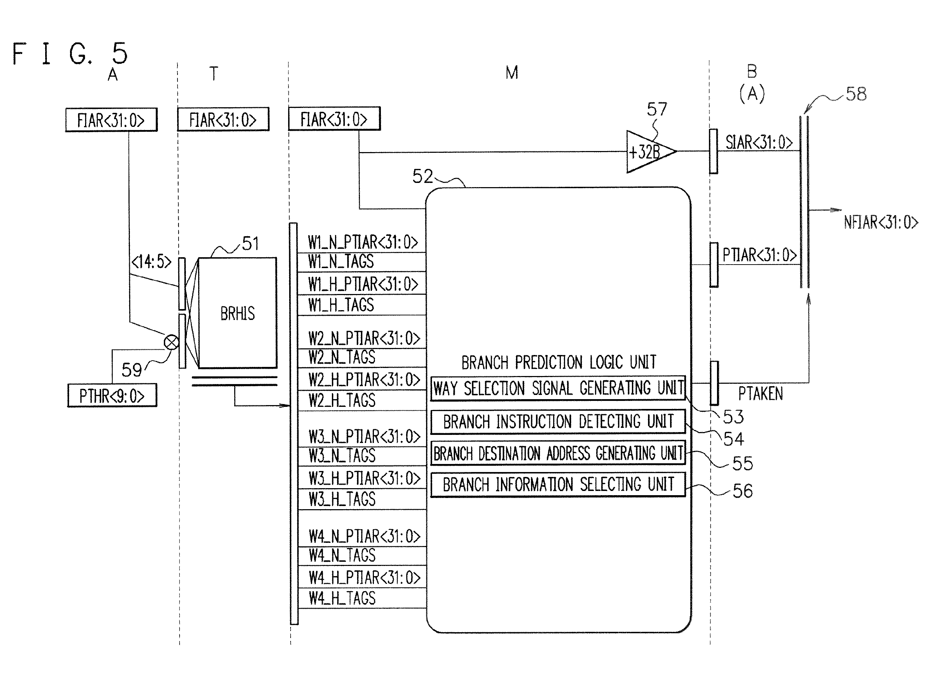

FIG. 5 is a diagram illustrating a configuration example of the branch predicting unit 22 in this embodiment. In this embodiment, at the time of the instruction fetch, data for eight instructions are read concurrently from the instruction cache memory or the like. A branch history has four ways, and for one index obtained from an instruction fetch address FIAR<31:0>, pieces of branch information in the four ways are read concurrently, and a valid way is selected therefrom.

At the initial first cycle (A stage), the instruction fetch controlling unit 21 decides the instruction fetch address FIAR<31:0>, and based on the decided instruction fetch address FIAR<31:0>, the branch predicting unit 22 generates an index of the branch history by an index generating logic. In the example illustrated in FIG. 5, a non-hashed index based on FIAR<14:5> being part of the instruction fetch address FIAR<31:0> and a hashed index obtained by an XOR operation circuit 59 performing an XOR operation of FIAR<14:5> and a register PTHR<9:0> are generated. The register PTHR stores a partial branch address connection value being a value in which parts of branch destination addresses of branch instructions detected at the time of the branch prediction are connected in time series, and it is assumed in this embodiment that, as the partial branch address connection value, a value in which any two bits extracted from the branch destination addresses of the branch instructions of the register indirect branch are connected in time series is stored.

At the next cycle (T stage), the branch predicting unit 22 searches a branch history (BRHIS) 51 by using the indexes (the non-hashed index and the hashed index) generated at the A stage, to read the branch information.

At the next cycle (M stage), a branch prediction logic unit 52 of the branch predicting unit 22 reads, from the branch history 51, pieces of the branch information of totally eight entries corresponding to the four ways and the two ports, and by using these pieces of branch information, performs the branch prediction. The branch prediction logic unit 52 determines whether or not a branch instruction included in the fetched instructions branches, and also predicts a branch destination address to decide a predicted branch destination address PTIAR<31:0>. The branch prediction logic unit 52 has a way selection signal generating unit 53, a branch instruction detecting unit 54, a branch destination address generating unit 55, and a branch information selecting unit 56.

Note that, in FIG. 5, Wi_N_PTIAR<31:0>, where i is a suffix (i = 1, 2, 3, 4), is a branch destination address read from a way i of the branch history 51 by using the non-hashed index, and Wi_N_TAGS is an instruction address and flags of the branch instruction read from the way i of the branch history 51 by using the non-hashed index. Wi_H_PTIAR<31:0> is a branch destination address read from the way i of the branch history by using the hashed index, and Wi_H_TAGS is an instruction address and flags of the branch instruction read from the way i of the branch history 51 by using the hashed index.

At the final cycle (B stage), the instruction fetch controlling unit 21 decides a next instruction fetch address NFIAR<31:0> based on the branch prediction made by the branch predicting unit 22. Incidentally, because of the pipeline operation, the B stage of this instruction corresponds to the A stage of the next instruction. When predicting that the branch occurs, the branch predicting unit 22 sets a signal PTAKEN to "1" to output it to the instruction fetch controlling unit 21. The instruction fetch controlling unit 21 continues to fetch an instruction by setting the predicted branch destination address PTIAR<31:0> obtained by the branch prediction as the next instruction fetch address NFIAR<31:0>. When predicting that the branch does not occur, the branch predicting unit 22 sets the signal PTAKEN to "0" to output it to the instruction fetch controlling unit 21, and the instruction fetch controlling unit 21 continues to fetch an instruction by setting an address SIAR<31:0> resulting from an increment in a sequential direction as the next instruction fetch address NFIAR<31:0>. The address SIAR<31:0> is an address value obtained by an adding unit 57 adding a 32-byte value corresponding to a data size of eight instructions to the instruction fetch address FIAR<31:0>.

The way selection signal generating unit 53, the branch instruction detecting unit 54, the branch destination address generating unit 55, and the branch information selecting unit 56 of the branch prediction logic unit 52 will be described.

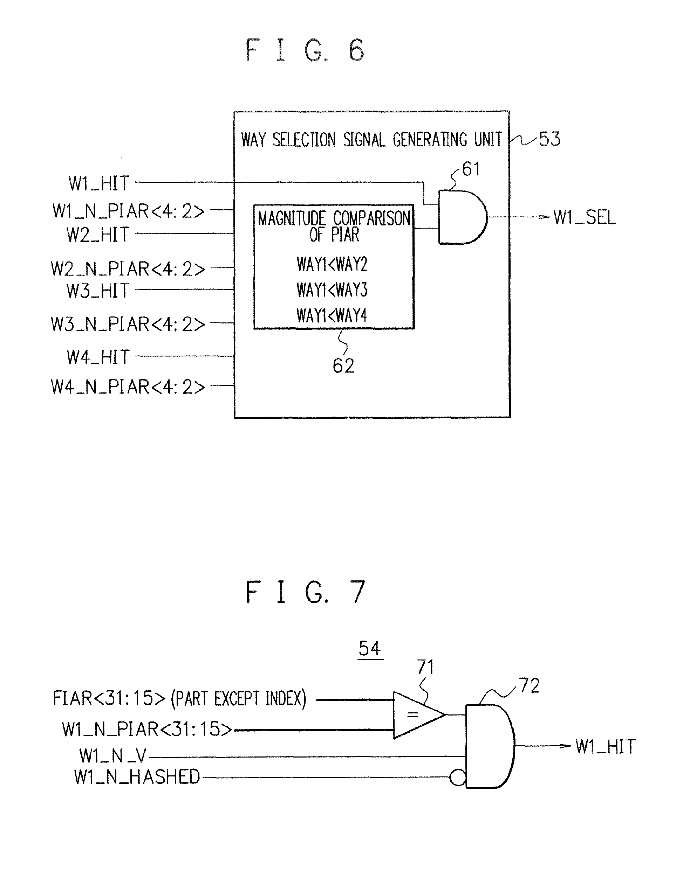

FIG. 6 is a diagram illustrating a configuration example of the way selection signal generating unit 53. The way selection signal generating unit 53 decides a way from which the branch information is to be selected out of pieces of the branch information obtained from the branch history. The way selection signal generating unit 53 decides the way that is to be selected by using the branch information obtained from the non-hashed index. Here, for simplicity, a description will be given on assumption that, if a valid entry of a branch instruction exists in the branch history, it is predicted that the corresponding branch instruction branches.

From entries retrieved in the respective ways by the non-hashed index, the way selection signal generating unit 53 receives signals W1_HIT, W2_HIT, W3_HIT, W4_HIT each indicating that a valid entry of a branch instruction exists and W1_N_PIAR<4:2>, W2_N_PIAR<4:2>, W3_N_PIAR<4:2>, W4_N_PIAR<4:2> each being a less significant part of a registered instruction address of the branch instruction. Here, the less significant part PIAR<4:2> of the instruction address indicates a position of the branch instruction in eight instructions when the eight instructions are concurrently fetched.

The way selection signal generating unit 53 selects a way in which the less significant part PIAR<4:2> of the instruction address has the smallest value, that is, a way in which the instruction position is the head of the branch instructions, out of the ways in which the valid entries of the branch instructions exist (the signal HIT is "1"). For example, it is assumed that the signal W1_HIT of the way 1 is "1" and as a result of the comparison in a comparing unit 62, the value of the less significant part W1_N_PIAR<4:2> of the instruction address in the way 1 is the smallest as compared with the other valid ways. At this time, the way selection signal generating unit 53 sets a signal W1_SEL output from a logical product operation circuit (AND circuit) 61 to "1" and outputs it to the branch information selecting unit 56.

On the other hand, when the signal W1_HIT of the way 1 is "0" or when the value of the less significant part W1_N_PIAR<4:2> of the instruction address in the way 1 is larger than the values in the other valid ways even though the signal W1_HIT of the way 1 is "1", the way selection signal generating unit 53 sets the signal Wi_SEL of a way i in which the value of PIAR<4:2> is the smallest out of the other valid ways to "1" to output it to the branch information selecting unit 56.

In this embodiment, the entry of the branch history by the hashed index is stored in the same way as that of the entry of the branch history by the non-hashed index of the corresponding branch instruction. Therefore, the processing result in the way selection signal generating unit 53 can be used both for the selection of the branch information of the entry of the branch history searched by the non-hashed index and the selection of the branch information of the entry of the branch history searched by the hashed index. The way selection signal generating unit 53 operates based on the branch information obtained by using the non-hashed index and therefore can be configured with substantially the same logic as a conventional logic, so that an increase in circuit scale in the way selection signal generating unit 53 can be substantially 0.

When at least one of the signals W1_HIT, W2_HIT, W3_HIT, W4_HIT is "1", the branch prediction logic unit 52 predicts that the branch occurs and sets the signal PTAKEN to "1" to output it to the instruction fetch controlling unit 21. When the signals W1_HIT, W2_HIT, W3_HIT, W4_HIT are all "0", the branch prediction logic unit 52 determines that no branch instruction exists in the fetched eight instructions to predict that the branch does not occur and sets the signal PTAKEN to "0" to output it to the instruction fetch controlling unit 21.

FIG. 7 is a diagram illustrating a configuration example of the branch instruction detecting unit 54. The branch instruction detecting unit 54 is formed for each way and generates the signal Wi_HIT indicating whether or not the branch instruction registered in the way i is a valid entry. The branch instruction detecting unit 54 generates the signal Wi_HIT by using the branch information obtained from the non-hashed index.

FIG. 7 illustrates the branch instruction detecting unit 54 of the way 1 as an example. From the branch history, the branch instruction detecting unit 54 of the way 1 receives W1_N_PIAR<31:15> being the registered instruction address of the branch instruction, a flag W1_N_V indicating whether or not the read branch information is valid, and a flag W1_N_HASHED indicating whether or not the index used at the time of the registration of the branch information is a hashed index.

The branch instruction detecting unit 54 of the way 1 has a comparator 71 and an AND circuit 72. The comparator 71 compares an instruction fetch address FIAR<31:15> and the registered instruction address W1_N_PIAR<31:15> of the branch instruction to output the comparison result. The AND circuit 72 receives the output of the comparator 71, the flag W1_N_V, and the inverted flag W1_N_HASHED to output the arithmetic operation result of these as the signal W1_HIT.

That is, when the flag W1_N_V is "1", the flag W1_N_HASHED is "0", and the registered instruction address W1_N_PIAR<31:15> of the branch instruction agrees with the instruction fetch address FIAR<31:15>, the branch instruction detecting unit 54 of the way 1 sets the signal W1_HIT to "1" to output it to the way selection signal generating unit 53. When the registered instruction address W1_N_PIAR<31:15> of the branch address does not agree with the instruction fetch address FIAR<31:15>, the branch instruction detecting unit 54 of the way 1 sets the signal W1_HIT to "0" to output it to the way selection signal generating unit 53. When the flag W1_N_HASHED is "1", or when the flag W1_N_V is "0", the branch instruction detecting unit 54 of the way 1 sets the signal W1_HIT to "0" to output it to the way selection signal generating unit 53.

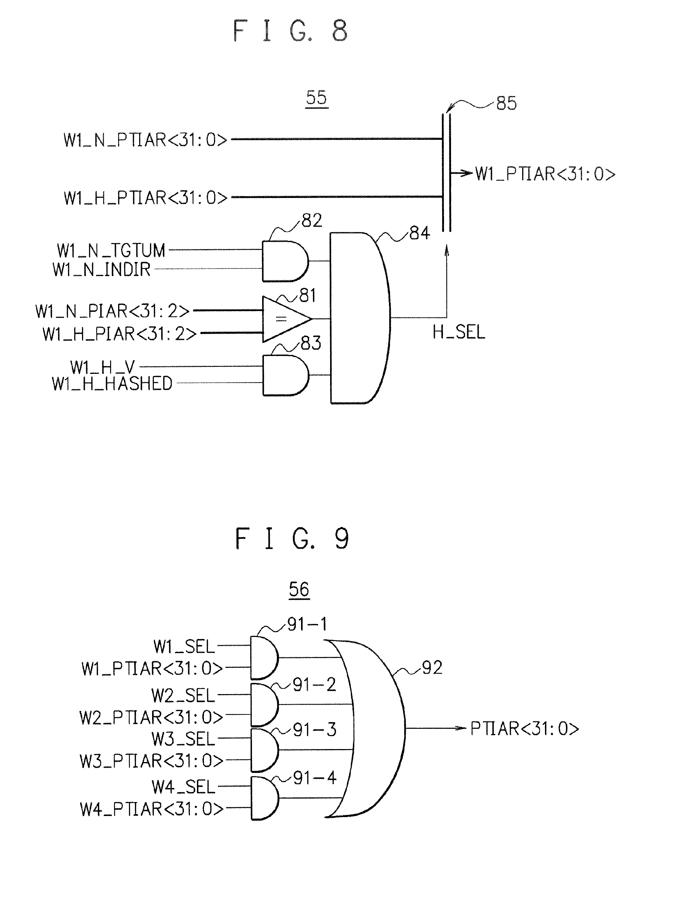

FIG. 8 is a diagram illustrating a configuration example of the branch destination address generating unit 55. The branch destination address generating unit 55 is formed for each way and selects the branch destination address Wi_N_PTIAR<31:0> read by the non-hashed index or the branch destination address Wi_H_PTIAR<31:0> read by the hashed index, in the way Wi.

In FIG. 8, the branch destination address generating unit 55 of the way 1 is illustrated as an example. The branch destination address generating unit 55 of the way 1 receives, from the branch history, an instruction address W1_N_PIAR<31:2> of a branch instruction of an entry of the branch history searched by the non-hashed index, a flag W1_N_TGTUM indicating whether or not the branch instruction ever caused a prediction failure of a branch destination address in the past, and a flag W1_N_INDIR indicating whether or not the branch instruction is a register indirect branch. Further, the branch destination address generating unit 55 of the way 1 receives an instruction address W1_H_PIAR<31:2> of the branch instruction of an entry of the branch history searched by the hashed index, a flag W1_H_V indicating whether or not read branch information is valid, and a flag W1_H_HASHED indicating whether or not the index used at the time of the registration of the branch information is the hashed index. Further, the branch destination address generating unit 55 of the way 1 receives the branch destination addresses W1_N_PTIAR<31:0>, W1_H_PTIAR<31:0> being selection targets.

The branch destination address generating unit 55 of the way 1 has a comparator 81, AND circuits 82, 83, 84, and a selecting circuit 85. The comparator 81 compares the instruction addresses W1_N_PIAR<31:2> and W1_H_PIAR<31:2> of the branch instruction to output the comparison result. The AND circuit 82 receives the flag W1_N_TGTUM and the flag W1_N_INDIR to output the arithmetic operation result of these. The AND circuit 83 receives the flag W1_H_V and the flag W1_H_HASHED to output the arithmetic operation result of these. The AND circuit 84 receives the outputs of the comparator 81 and the AND circuits 82, 83 to output the arithmetic operation result of these as a signal H_SEL. According to the signal H_SEL output from the AND circuit 84, the selecting circuit 85 selects one of the branch destination addresses W1_N_PTIAR<31:0>, W1_H_PTIAR<31:0> to output the selected branch destination address as the branch destination address W1_PTIAR<31:0> of the way 1.

The comparator 81 of the branch destination address generating unit 55 verifies the agreement between the instruction addresses W1_N_PIAR<31:2>, W1_H_PIAR<31:2> of the branch instruction. Consequently, it is confirmed whether or not the branch instruction corresponding to the entry read by the hashed index is the same as the branch instruction corresponding to the entry read by the non-hashed index.

When the instruction addresses are not the same, the entry read by the hashed index is not one corresponding to the instruction address for the instruction fetch, and therefore, the signal H_SEL becomes "0". Therefore, the branch destination address generating unit 55 selects and outputs the branch destination address W1_N_PTIAR<31:0> of the non-hashed index as the predicted branch destination address of the way 1.

Even when the instruction addresses are the same, if the flag W1_N_TGTUM is "0", it indicates that a varying frequency of the branch destination address of the branch instruction is low, and therefore, it is determined that the entry of the hashed index is not valid. Even when the instruction addresses are the same, if the flag W1_N_INDIR is "0", it indicates that the branch destination address of the branch instruction does not vary, and therefore, it is determined that the entry of the hashed index is not valid. Even when the instruction addresses are the same, if the flag W1_H_V is "0", it is determined that the entry of the hashed index is not valid. Even when the instruction addresses are the same, if the flag W1_H_HASHED is "0", it indicates that this entry is an entry registered by using the non-hashed index but the indexes only accidentally agree with each other, and therefore, the entry of the hashed index is determined as not valid.

When it is determined that the entry of the hashed index is not valid, the signal H_SEL becomes "0", and the branch destination address generating unit 55 selects and outputs the branch destination address W1_N_PTIAR<31:0> of the non-hashed index as the predicted branch destination address of the way 1. When the instruction addresses are the same and it is determined that the entry of the hashed index is valid, the signal H_SEL becomes "1", and the branch destination address generating unit 55 selects and outputs the branch destination address W1_H_PTIAR<31:0> of the hashed index as the predicted branch destination address of the way 1.

As illustrated in FIG. 8, the branch destination address generating unit 55 is composed of a multi-bit coincidence logic and a selection logic. On the other hand, as illustrated in FIG. 6, the way selection signal generating unit 53 is structured based on the signal Wi_HIT obtained from the result of the multi-bit coincidence logic and therefore is larger in logic volume as compared with the branch destination address generating unit 55. Therefore, the branch destination address generating unit 55 does not have an influence on an increase in frequency of the processor.

FIG. 9 is a diagram illustrating a configuration example of the branch information selecting unit 56. The branch information selecting unit 56 decides the predicted branch destination address PTIAR<31:0> based on the signal Wi_SEL from the way selection signal generating unit 53 and the branch destination address Wi_PTIAR<31:0> from the branch destination address generating unit 55. The branch information selecting unit 56 has AND circuits 91-1 to 91-4 and a logical sum operation circuit (OR circuit) 92. The AND circuit 91-i receives the signal Wi_SEL and the branch destination address Wi_PTIAR<31:0> of the way i. The OR circuit 92 receives outputs of the AND circuits 91-1 to 91-4 and outputs the predicted branch destination address PTIAR<31:0>. That is, the branch information selecting unit 56 outputs the branch destination address Wi_PTIAR<31:0> of the way i whose signal Wi_SEL is "1" as the predicted branch destination address PTIAR<31:0>.

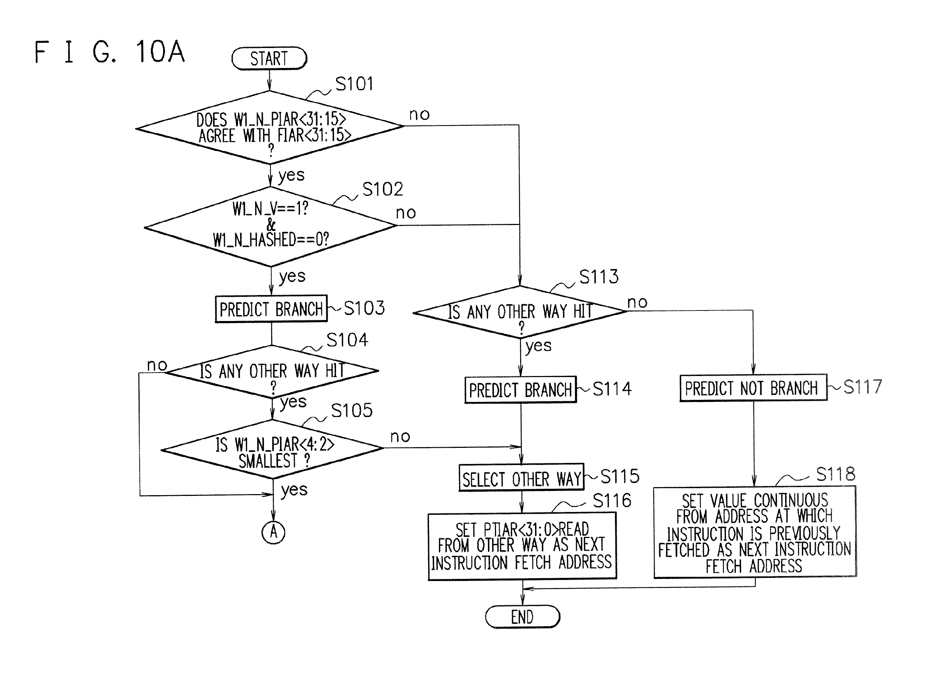

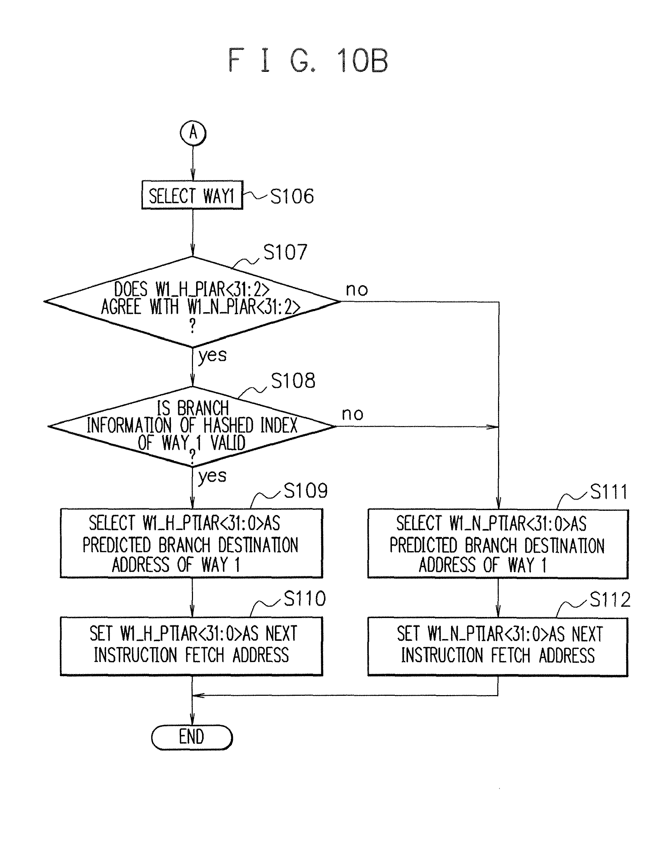

FIG. 10A and FIG. 10B are flowcharts illustrating an operation example of the branch predicting unit 22 in this embodiment. In the description below, the operation relating to the way 1 will be mainly described. The branch predicting unit 22 starts the branch prediction operation when receiving the instruction fetch address FIAR output from the instruction fetch controlling unit 21. First, the branch instruction detecting unit 54 of the branch prediction logic unit 52 determines whether or not the instruction address W1_N_PIAR<31:5> of the branch instruction in the branch information read from the branch history by using the non-hashed index agrees with the instruction fetch address FIAR (S101).

When the addresses agree with each other as a result of the determination at step S101, the branch instruction detecting unit 54 of the branch prediction logic unit 52 determines whether or not the flag W1_N_V its "1" and the flag W1_N_HASHED is "0" in the branch information read from the branch history by using the non-hashed index (S102). When, as a result, the flag W1_N_V is "1" and the flag W1_N_HASHED is "0", the branch instruction detecting unit 54 of the branch prediction logic unit 52 predicts that the branch instruction branches (S103).

Subsequently, the way selection signal generating unit 53 of the branch prediction logic unit 52 determines whether or not any other way is hit, that is, whether or not the branch instruction is predicted to branch (S104). When other ways are hit as a result, the way selection signal generating unit 53 of the branch prediction logic unit 52 determines whether or not a value of the less significant part W1_N_PIAR<4:2> of the instruction address in the way 1 is the smallest as compared with those in the other ways that are hit (S105). When any other way is not hit, or the value of the less significant part W1_N_PIAR<4:2> of the instruction address in the way 1 is the smallest as compared with those in the other ways which are hit, the way selection signal generating unit 53 of the branch prediction logic unit 52 selects the way 1 (S106).

Next, the branch destination address generating unit 55 of the branch prediction logic unit 52 determines whether or not the instruction address W1_N_PIAR<31:2> of the branch instruction in the branch information read by the non-hashed index and the instruction address W1_H_PIAR<31:2> of the branch instruction in the branch information read by the hashed index agree with each other (S107). When, as a result of the determination at step S107, the instruction addresses of the branch instruction agree with each other, the branch destination address generating unit 55 of the branch prediction logic unit 52 determines whether or not the branch information in the way 1 read by the hashed index is valid (S108).

When determining at step S108 that the branch information in the way 1 read by the hashed index is valid, the branch destination address generating unit 55 of the branch prediction logic unit 52 selects the branch destination address W1_H_PTIAR<31:0> in the branch information read by the hashed index, as the predicted branch destination address of the way 1 (S109). Then, the branch information selecting unit 56 of the branch prediction logic unit 52 outputs the branch destination address W1_H_PTIAR<31:0> selected as the predicted branch destination address of the way 1 and sets it as a next instruction fetch address (S110).

When as a result of the determination at step S107, the instruction addresses of the branch instruction do not agree with each other, or when as a result of the determination at step S108, the branch information in the way 1 read by the hashed index is not valid, the branch destination address generating unit 55 of the branch prediction logic unit 52 selects the branch destination address W1_N_PTIAR<31:0> in the branch information read by the non-hashed index, as the predicted branch destination address of the way 1 (S111). Then, the branch information selecting unit 56 of the branch prediction logic unit 52 outputs the branch destination address W1_N_PIAR<31:0> selected as the predicted branch destination address of the way 1 and sets it as a next instruction fetch address (S112).

When as a result of the determination at step S101, the addresses do not agree with each other, or when as a result of the determination at step S102, the condition that the flag W1_N_V is "1" and the flag W1_N_HASHED is "0" is not satisfied, the branch instruction detecting unit 54 of the branch prediction logic unit 52 determines whether or not any other way is hit (S113). When as a result, other ways are hit, the branch instruction detecting unit 54 of the branch prediction logic unit 52 predicts that the branch instruction branches (S114). Then, the way selection signal generating unit 53 of the branch prediction logic unit 52 selects a way in which a value of the less significant part Wi_N_PIAR<4:2> of the instruction address is the smallest out of the hit other ways (S115). Subsequently, the branch destination address generating unit 55 and the branch information selecting unit 56 of the branch prediction logic unit 52 output the branch destination address PTIAR<31:0> in the branch information read from the selected other way and set it as a next instruction fetch address (S116).

When, as a result of the determination at step S113, no other way is hit, the branch instruction detecting unit 54 of the branch prediction logic unit 52 predicts that the branch instruction does not branch (S117). Then, an address value obtained by a sequential increase and thus continuous from the instruction fetch address is set as a next instruction fetch address (S118).

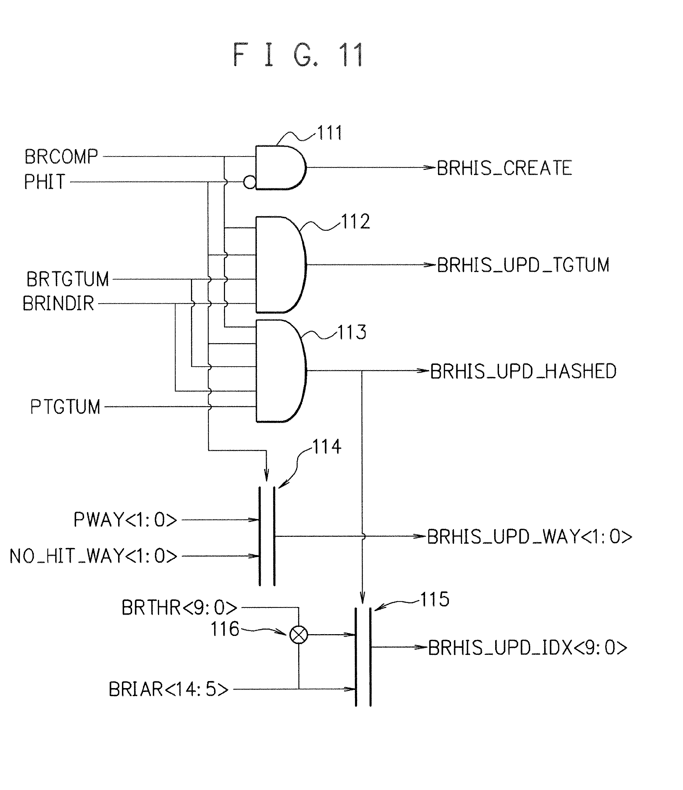

Next, the branch history updating unit 34 in this embodiment will be described. The branch history updating unit 34 operates based on the result of a branch arithmetic operation, and performs the generation of branch information that is to be registered in the branch history, the decision of an index of a registration destination, the decision of a way of the registration destination, and so on. FIG. 11 is a diagram illustrating a configuration example of the branch history updating unit 34. The branch history updating unit 34 has AND circuits 111, 112, 113, selecting circuits 114, 115, and an XOR circuit 116. Signals and so on input to the branch history updating unit 34 are supplied from the branch controlling unit 30.

The AND circuit 111 receives a signal BRCOMP indicating that the branch arithmetic operation is completed and also receives an inverted signal PHIT indicating that a valid entry corresponding to the branch instruction exists in the branch history at the time of the branch prediction. The AND circuit 111 outputs its arithmetic operation result as a signal BRHIS_CREATE instructing the creation of a new entry in the branch history.

The AND circuit 112 receives the signal BRCOMP, the signal PHIT, a signal BRTGTUM indicating that a prediction failure of a branch destination address is detected, and a signal BRINDIR indicating that the branch instruction is a register indirect branch. The AND circuit 112 outputs its arithmetic operation result as a signal BRHIS_UPD_TGTUM. The signal BRHIS_UPD_TGTUM is a signal for updating the flag TGTUM in the branch information of the entry of the branch history corresponding to the branch instruction to "1".

The AND circuit 113 receives the signal BRCOMP, the signal PHIT, the signal BRTGTUM, the signal BRINDIR, and a signal PTGTUM indicating that the flag TGTUM in the branch information read from the entry of the branch history corresponding to the branch instruction is "1" at the time of the branch prediction. The AND circuit 113 outputs its arithmetic operation result as a signal BRHIS_UPD_HASHED. The signal BRHIS_UPD_HASHED is a signal for setting the flag HASHED in the branch information of the entry of the branch history to "1".

According to the signal PHIT, the selecting circuit 114 selects PWAY<1:0> indicating the way number of the entry of the branch history corresponding to the branch instruction at the time of the branch prediction or NO_HIT_WAY<1:0> indicating an updated way obtained at the time when the entry of the branch history corresponding to the branch instruction is not hit at the time of the branch prediction. The selecting circuit 114 outputs the selected way as BRHIS_UPD_WAY<1:0> indicating the updated way of the branch history.

According to the output of the AND circuit 113, the selecting circuit 115 selects an instruction address BRIAR<14:5> of the branch instruction or a value obtained by an XOR circuit 116 performing an XOR operation of the instruction address BRIAR<14:5> of the branch instruction and a register BTHR<9:0>. The selecting circuit 115 outputs the selected value as BRHIS_UPD_IDX<9:0> indicating an index whose branch history is updated. The register BTHR stores the partial branch address connection value which is a value in which parts of branch destination addresses of branch instructions whose branch arithmetic operation is completed are connected in time series, and in this embodiment, it is assumed that, as the partial branch address connection value, a value in which any two bits extracted from the branch destination addresses of the branch instructions of the register indirect branch are connected in time series is stored. Incidentally, as long as the branch prediction is a success, the value of the register PTHR which is referred to at the time of the branch prediction is equal to the value of the register BTHR which is referred to when the branch arithmetic operation is completed through the pipeline, if a branch instruction is at the same instruction address and past branch instructions executed before this branch instruction is executed are the same.

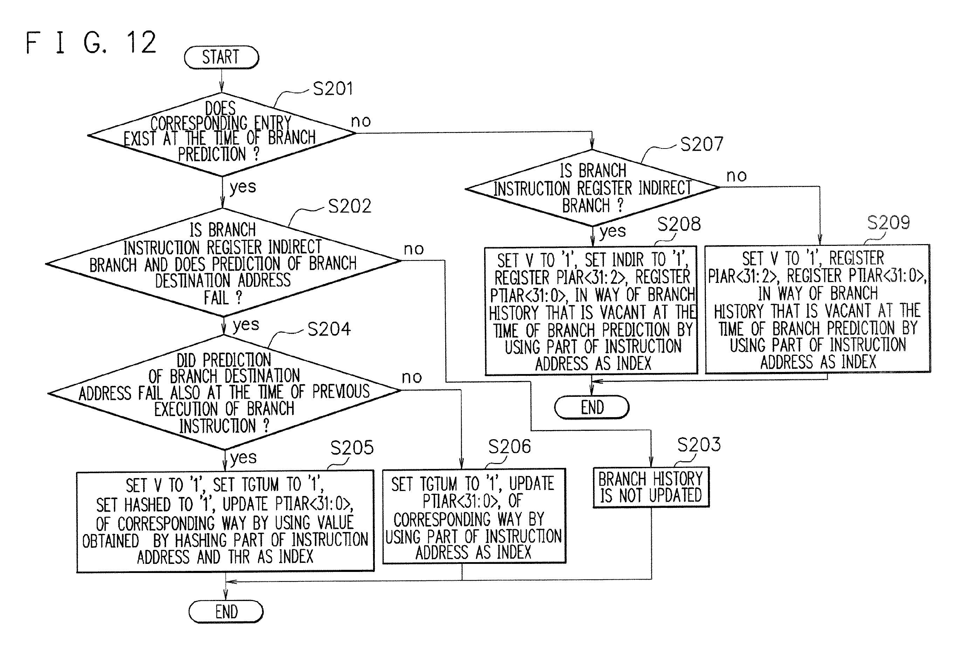

FIG. 12 is a flowchart illustrating an operation example of the branch history updating unit 34. When the branch arithmetic operation by the branch controlling unit 30 and so on is completed, the branch history updating unit 34 determines whether or not a valid entry corresponding to the branch instruction exists at the time of the branch prediction, that is, whether or not the signal PHIT is "1" (S201). When the corresponding valid entry exists at the time of the branch prediction (the signal PHIT is "1"), the branch history updating unit 34 determines whether or not the branch instruction is the register indirect branch, and whether or not a prediction failure of the branch destination address is detected (S202). When, as a result, the branch instruction is not the register indirect branch or the prediction failure of the branch destination address is not detected, the branch history updating unit 34 finishes the operation without updating the branch history (S203).

When, as a result of the determination at step S202, the branch instruction is the register indirect branch and the prediction failure of the branch destination address is detected, the branch history updating unit 34 determines whether or not a prediction failure of the branch destination address was also detected in this branch instruction in the past (S204). When, as a result, the prediction failure of the branch destination address was detected in the past, the branch history updating unit 34 uses, as an index, a value obtained by an XOR arithmetic operation of part of an instruction address of the branch instruction and a value of the register BTHR to update branch information of a corresponding way. That is, the branch history updating unit 34 updates all of the flags V, TGTUM, HASHED to "1" in the way designated by PWAY<1:0> and updates the branch destination address PTIAR<31:0> to a branch destination address obtained by the arithmetic operation (S205).

When, as a result of the determination at step S204, the prediction failure of the branch destination address was not detected in the past, the branch history updating unit 34 uses, as an index, part of the instruction address of the branch instruction to update the branch information of the corresponding way. That is, the branch history updating unit 34 updates the flag TGTUM of the branch information registered in the branch history to "1" and updates the branch destination address PTIAR<31:0> to the branch destination address obtained by the arithmetic operation (S206).

When, as a result of the determination at step S201, the corresponding valid entry does not exist at the time of the branch prediction (the signal PHIT is "0"), the branch history updating unit 34 determines whether or not the branch instruction is the register indirect branch (S207). When, as a result, the branch instruction is the register indirect branch, the branch history updating unit 34 uses, as an index, part of the instruction address of the branch instruction to register the branch information in a way of the branch history which is vacant at the time of the branch prediction. That is, the branch history updating unit 34 sets both of the flags V, INDIR to "1" in the way designated by NO_HIT_WAY<1:0> and registers the instruction address PIAR<31:2> of the branch instruction and the branch destination address PTIAR<31:0> (S208). When the branch instruction is not the register indirect branch, the branch history updating unit 34 uses, as an index, part of the instruction address of the branch instruction to register the branch information in the way of the branch history which is vacant at the time of the branch prediction. That is, the branch history updating unit 34 sets the flag V to "1" and registers the instruction address PIAR<31:2> of the branch instruction and the branch destination address PTIAR<31:0> in the way designated by NO_HIT_WAY<1:0> (S209).

According to this embodiment, even without providing a circuit which counts the number of times prediction failures of a branch destination address occur, a table storing instruction addresses of a branch instruction for which many prediction failures occur, and so on, it is possible to perform branch prediction of a branch instruction whose branch destination address can vary, which can prevent an increase in circuit scale. Further, a logic volume required up to the search of the branch history at the time of the branch prediction increases only a little, which enables an increase in frequency of the processor. As for the selection of branch information read from the branch history, by making a way of an entry of the branch history registered by a hashed index the same as a way of an entry of the branch history, of the corresponding branch instruction, registered by a non-hashed index, the selection can be realized without any increase in logic relating to the generation of the way selection signal, which enables an increase in frequency of the processor.

In an embodiment, it is possible to hold the branch information corresponding to one branch instruction in the branch history by using a plurality of different indexes, which enables the branch prediction for a branch instruction whose branch destination address varies. Further, a plurality of pieces of branch information can be read in parallel from the branch history by using a plurality of different indexes and a frequency of a change of a branch destination address is managed by updated information, which enables an increase in frequency of the processor and can prevent an increase in circuit scale. However, the increase in a parallel degree of the reference to the branch history necessitates selecting the branch information after the branch history is read. When the branch history includes a plurality of ways, selection targets further increase, which makes an increase in frequency difficult. Therefore, by setting a restriction so that, regarding the same branch instruction, an entry registered by a first index and an entry registered by a hashed index can be configured only in the same way, it is possible to reduce a logic volume of a way selection logic of the branch information read from the branch history without increasing the selection targets of the way and to configure a branch predicting unit suitable for an increase in frequency.

## Claims

1. A processor comprising:
an instruction executing unit configured to execute an instruction;
a branch history storing unit configured to store, in each of a plurality of ways, a branch history including a first index which is part of an address of the instruction executed by the instruction executing unit and a second index which is an arithmetic operation result value obtained by an arithmetic operation of part of the instruction address and a variable value decided according to an execution history of a plurality of instructions including a branch instruction;
a branch predicting unit configured to, when predicting that branch is established as a result of performing branch prediction of the branch instruction based on pieces of the branch information on the branch instructions included in entries read from the branch histories stored in the branch history storing unit, select one piece of the branch information from the plural pieces of read branch information corresponding to the plural ways respectively to output a predicted branch destination address; and
a branch history updating unit configured to, when the predicted branch destination address output by the branch predicting unit is different from a branch destination address obtained from the branch instruction, set updated information of the branch information to update the branch history, and when the predicted branch destination address output by the branch predicting unit is different from the branch destination address obtained from the branch instruction and the updated information is set in the branch information, register the branch information in the branch history stored in the branch history storing unit, by using the second index.

2. The processor according to claim 1, wherein, when the branch information is registered in the branch history by using the second index, branch information of a branch instruction at the same instruction address is registered in an index different from the first index of a way corresponding to the branch history which is referred to when the branch prediction of the branch instruction is performed, by using way information indicating the way corresponding to the branch history which is referred to when the branch prediction of the branch instruction is performed.

3. The processor according to claim 1 or 2, wherein, in the branch history stored in the branch history storing unit, the ways of the branch instruction at the same instruction address registered in the plural indexes are made the same.

4. The processor according to any of claims 1 to 3, wherein the branch information further includes setting information indicating whether or not the branch information is branch information registered in the branch history by using the second index, and the predicted branch destination address is selected by using: first branch information which includes the updated information and the setting information and which is obtained by referring to the branch history by using the first index; and second branch information obtained by referring to the branch history by using the second index.

5. A control method of a processor including: an instruction executing unit which executes an instruction; and a branch history storing unit which stores, in each of a plurality of ways, a branch history including a first index which is part of an address of the instruction executed by the instruction executing unit and a second index which is an arithmetic operation result value obtained by an arithmetic operation of part of the instruction address and a variable value decided according to an execution history of a plurality of instructions including a branch instruction, the control method comprising:
when predicting that branch is established as a result of performing branch prediction of the branch instruction based on pieces of branch information on branch instructions included in entries read from the branch histories stored in the branch history storing unit, selecting one piece of the branch information from the plural pieces of read branch information corresponding to the plural ways respectively to output a predicted branch destination address, the selecting and the outputting being executed by a branch predicting unit that the processor includes; and
when the predicted branch destination address output by the branch predicting unit is different from a branch destination address obtained from the branch instruction, setting updated information of the branch information to update the branch history, and when the predicted branch destination address output by the branch predicting unit is different from the branch destination address obtained from the branch instruction and the updated information is set in the branch information, registering the branch information in the branch history stored in the branch history storing unit, by using the second index, the updating and the registering being performed by a branch history updating unit that the processor includes.
